# EUROPEAN PATENT APPLICATION

(11) **EP 4 431 467 A1**
(43) Date of publication of application: **18.09.2024**
(21) Application number: 22890085.8
(22) Date of filing: 17.02.2022
(51) Int. Cl.: C02F 11/12, C02F 11/13, C02F 11/125, C02F 11/122, B01D 33/23, B01D 33/27, D04B 1/20, F26B 11/04, F26B 23/00

(54) **SLUDGE TREATMENT APPARATUS AND EXCRETA TREATMENT APPARATUS INCLUDING SAME**

(30) Priority: 08.11.2021 KR 20210152572
(71) Applicant: Samsung Electronics Co., Ltd., Suwon-si, Gyeonggi-do 16677 (KR)
(72) Inventor: SHIN, Hyunsuk, Suwon-si, Gyeonggi-do 16678 (KR); KIM, Yongkwon, Suwon-si, Gyeonggi-do 16678 (KR); KIM, Ginam, Suwon-si, Gyeonggi-do 16678 (KR)
(74) Representative: Elkington and Fife LLP
(86) International application number: PCT/KR2022/002387
(87) International publication number: WO 2023/080345

(57) **Abstract**

A sludge treatment apparatus includes a dryer configured to dry first sludges and discharge second sludges, a burner configured to burn the second sludges, and a serial pipe connected to the burner. The dryer has air inlets through which air is introduced into the dryer, and the serial pipe is disposed adjacent to the dryer.

## Description

### Technical Field

The present disclosure relates to a sludge treatment apparatus and an excrement treatment apparatus.

### Background Art

Generally, excrement discharged from households is collected in a large-scale excrement treatment facility and then processed at once. In areas where large-scale excrement treatment facilities are not installed or are insufficient, excrement is not treated in a separate excrement treatment facility and is dumped around residences, which may cause hygiene and environmental problems.

In order to solve the above problems, there is a need for a domestic excrement treatment apparatus capable of directly treating excrement at home. Because the domestic excrement treatment apparatus is installed in a bathroom in a house, the domestic excrement treatment apparatus needs to have a small size and consume as little energy as possible by taking into account the lack of usable energy.

Liquid excrement and solid excrement may be collected and treated separately. For example, solid excrement may be dried and burned. When solid excrement is burned, noxious gases, such as CO and NOₓ, are generated, which may adversely affect people's health and the atmospheric environment. Therefore, domestic excrement treatment apparatuses need to be configured to discharge noxious gases below a required level.

### Disclosure

### Technical Problem

A technical objective of the present disclosure is to provide a sludge treatment apparatus and an excrement treatment apparatus, which both have low energy consumption.

A technical objective of the present disclosure is to provide a sludge treatment apparatus and an excrement treatment apparatus, which both emit less noxious gases.

However, the technical objectives of the present disclosure are not limited to those described above.

### Technical Solution

According to an aspect, a sludge treatment apparatus includes: a dryer configured to dry first sludges and discharge second sludges; a burner configured to burn the second sludges; and a serial pipe connected to the burner, wherein the dryer has air inlets through which air is introduced into the dryer, and the serial pipe is disposed adjacent to the dryer.

The sludge treatment apparatus may further include a heat transfer case disposed adjacent to the serial pipe, wherein the heat transfer case may be configured to increase efficiency of transferring heat generated in the serial pipe to the dryer.

The heat transfer case may be configured to surround the dryer and the serial pipe.

The serial pipe may have a thickness of 2.8 T or more.

The serial pipe tray may be disposed adjacent to the dryer.

The dryer may be configured to dry the first sludges such that water content of the second sludges is 8 % to 15 %.

The sludge treatment apparatus may further include a feeder between the dryer and the burner, wherein the feeder may include: a storage area configured to store the second sludges discharged from the dryer; and a feed screw configured to transfer the second sludges from the storage area to the burner.

The feeder may further include an agitator provided on the feed screw, and the agitator may be configured to mix the second sludges.

The feeder may further include an inclined input passage between the storage area and the burner, and the inclined input passage may be inclined such that one end of the inclined input passage adjacent to the storage area may be higher than another end of the inclined input passage adjacent to the burner.

The feed screw may be configured to transfer the second sludges at different speeds according to time.

The burner may include: a burning drum defining a burning chamber communicating with the serial pipe; and a Coanda nozzle disposed in the burning chamber, and the Coanda nozzle may be configured to return burning gas moving toward the serial pipe in the burning chamber.

The Coanda nozzle may include: a return passage; and a compressed air passage surrounding the return passage, and the return passage may have a streamlined shape.

The sludge treatment apparatus may include: a first exhaust pipe connected to the dryer; a first exhaust fan connected to the first exhaust pipe; a second exhaust pipe connected to the serial pipe; and a second exhaust fan connected to the second exhaust pipe.

The dryer may include: a dryer housing defining a drying chamber; drying screws provided in the drying chamber; and drying air inlets passing through the dryer housing.

The drying air inlets may pass through a lower portion of the dryer housing.

The drying screws may include flow holes through which air flows in the drying chamber.

The drying screws may be configured to move the first sludges such that the first sludges are dried for 24 hours.

According to an aspect, an excrement treatment apparatus includes: a solid excrement treatment device; and a liquid excrement treatment device, wherein the solid excrement treatment device includes: a dryer configured to dry first sludges and discharge second sludges; a burner configured to burn the second sludges; and a serial pipe connected to the burner, the dryer has air inlets through which air is introduced into the dryer, and the serial pipe is disposed adjacent to the dryer.

Temperatures in the burner and the serial pipe may be 650 °C or higher such that noxious gas generated by burning the second sludges may be burned in the burner and the serial pipe.

The dryer may include: a dryer housing defining a drying chamber; drying screws provided in the drying chamber; and drying air inlets passing through the dryer housing.

### Advantageous Effects

The present disclosure may provide a sludge treatment apparatus and an excrement treatment apparatus, which both have low energy consumption.

The present disclosure may provide a sludge treatment apparatus and an excrement treatment apparatus, which both emit less noxious gases.

However, the effects of the present disclosure are not limited to those described above.

### Description of Drawings

FIG. 1 is a front view of a sludge treatment apparatus according to an example embodiment.
FIG. 2 is a rear view of the sludge treatment apparatus of FIG. 1.
FIG. 3 is a cross-sectional view illustrating a dryer of the sludge treatment apparatus of FIG. 1.
FIG. 4 is a perspective view of a drying screw of the dryer of FIG. 3.
FIG. 5 is a cross-sectional view illustrating a feeder and a burner of the sludge treatment apparatus of FIG. 1.
FIG. 6 is an enlarged view for describing a Coanda nozzle of FIG. 5.
FIG. 7 is a cross-sectional view illustrating a burner, a serial pipe, a second exhaust pipe, and a second exhaust fan in the sludge treatment apparatus of FIG. 1.
FIG. 8 is a diagram corresponding to FIG. 3 and describing the operation of the dryer.
FIG. 9 is a diagram corresponding to FIG. 5 and describing a moving path of second sludges.
FIG. 10 is a diagram corresponding to FIG. 7 and describing a burning process.
FIG. 11 is a diagram corresponding to FIG. 6 and describing return of burning gas by a Coanda nozzle.
FIG. 12 is a diagram corresponding to FIG. 1 and illustrating a sludge treatment apparatus including a heat transfer case.
FIG. 13 is a block diagram of an excrement treatment apparatus according to an example embodiment.

### Best Mode

According to an aspect, a sludge treatment apparatus includes: a dryer configured to dry first sludges and discharge second sludges; a burner configured to burn the second sludges; and a serial pipe connected to the burner, wherein the dryer has air inlets through which air is introduced into the dryer, and the serial pipe is disposed adjacent to the dryer.

According to an aspect, an excrement treatment apparatus includes: a solid excrement treatment device; and a liquid excrement treatment device, wherein the solid excrement treatment device includes: a dryer configured to dry first sludges and discharge second sludges; a burner configured to burn the second sludges; and a serial pipe connected to the burner, the dryer has air inlets through which air is introduced into the dryer, and the serial pipe is disposed adjacent to the dryer.

### Mode for Invention

Hereinafter, embodiments of the present disclosure will be described in detail with reference to the accompanying drawings. In the following drawings, the same reference numerals denote the same elements, and the size of each element in the drawings may be exaggerated for clarity and convenience of explanation. Embodiments described herein are merely examples, and various modifications may be made thereto from these embodiments.

Hereinafter, the terms "on" may include not only those that are directly on in a contact manner, but also those that are above in a non-contact manner.

The singular forms "a," "an," and "the" as used herein are intended to include the plural forms as well unless the context clearly indicates otherwise. It will be understood that the terms "comprise," "include," or "have" as used herein specify the presence of stated elements, but do not preclude the presence or addition of one or more other elements.

In addition, the terms "-er/or" described in the specification mean units for processing at least one function or operation.

The expression "at least one of a, b, and c" indicates "only a," "only b," "only c," "a and b," "a and c," "b and c," or "all of a, b, and c."

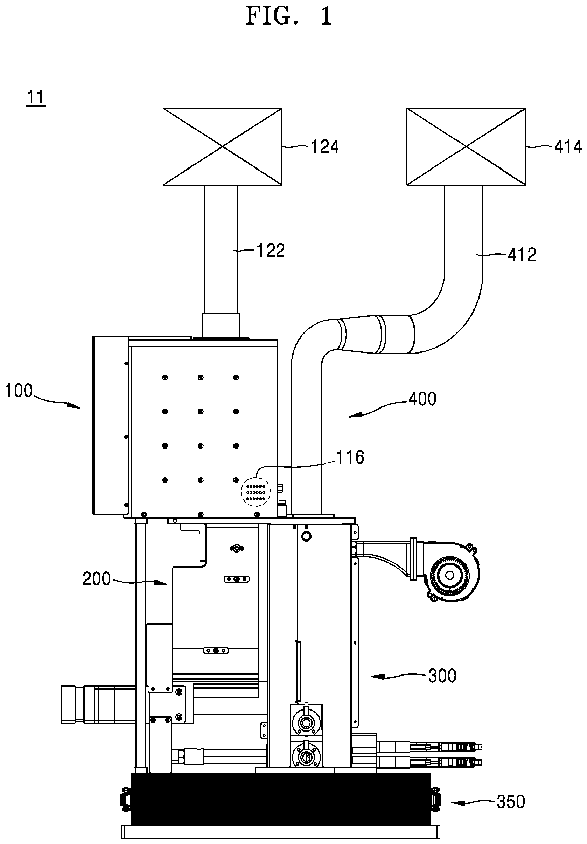

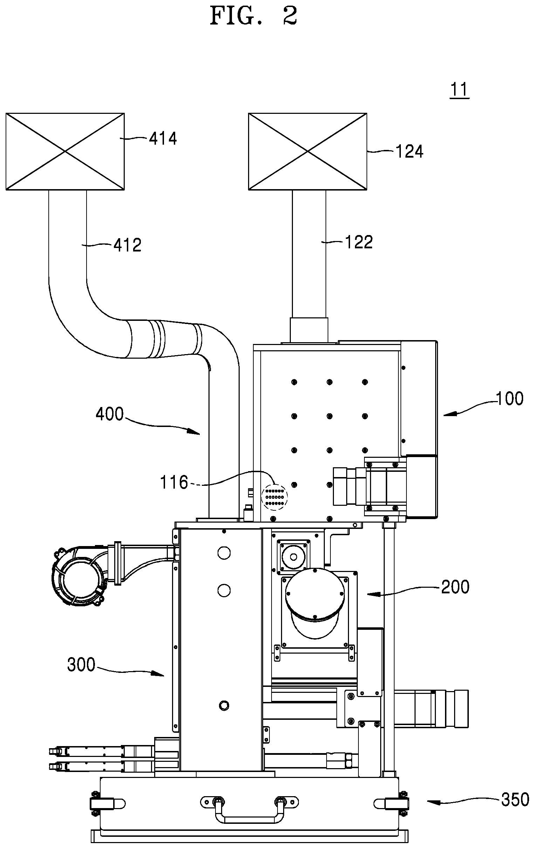

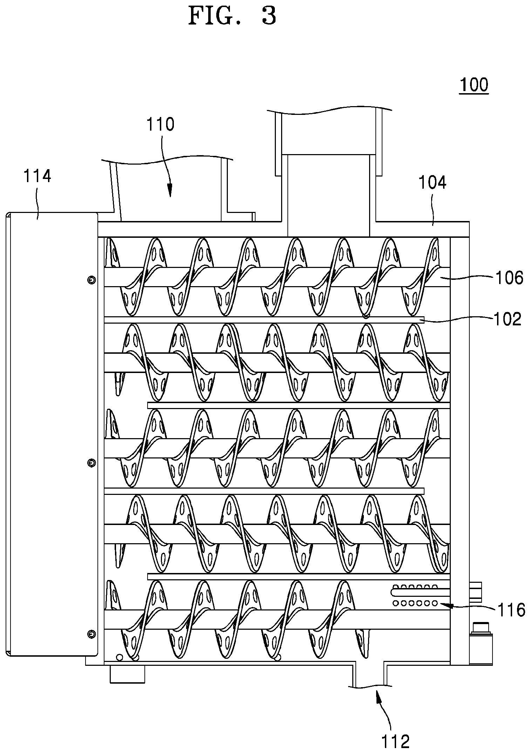

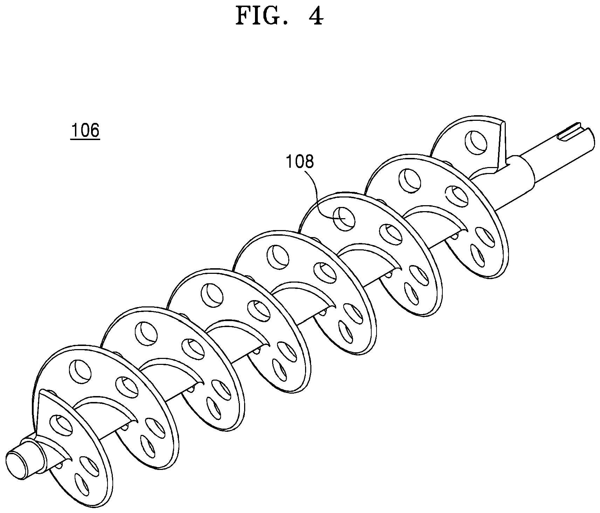

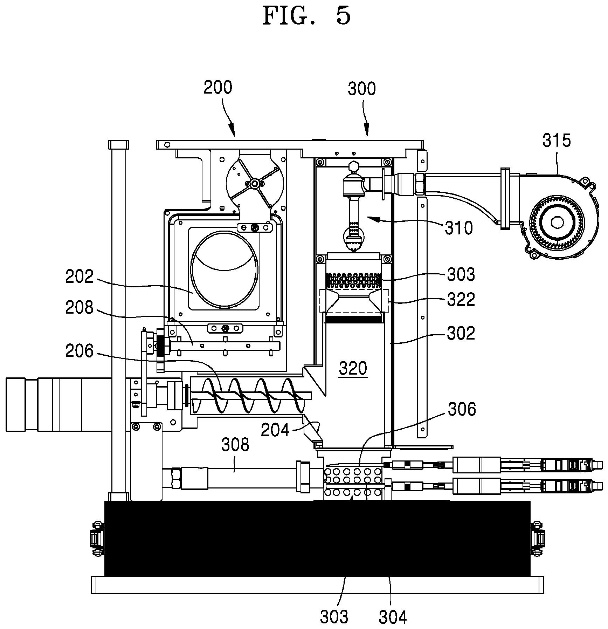

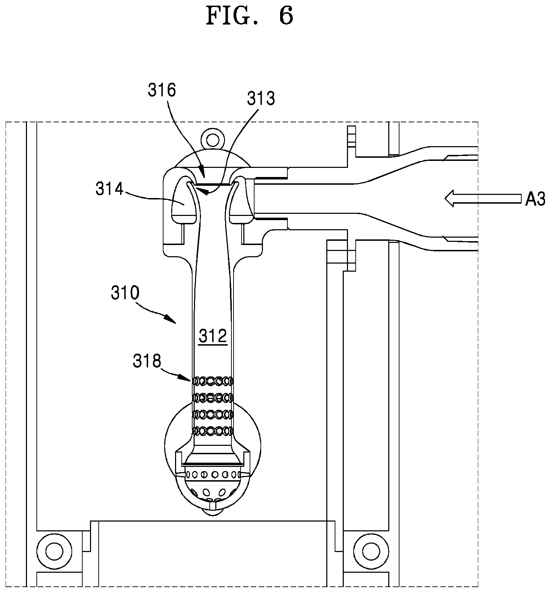

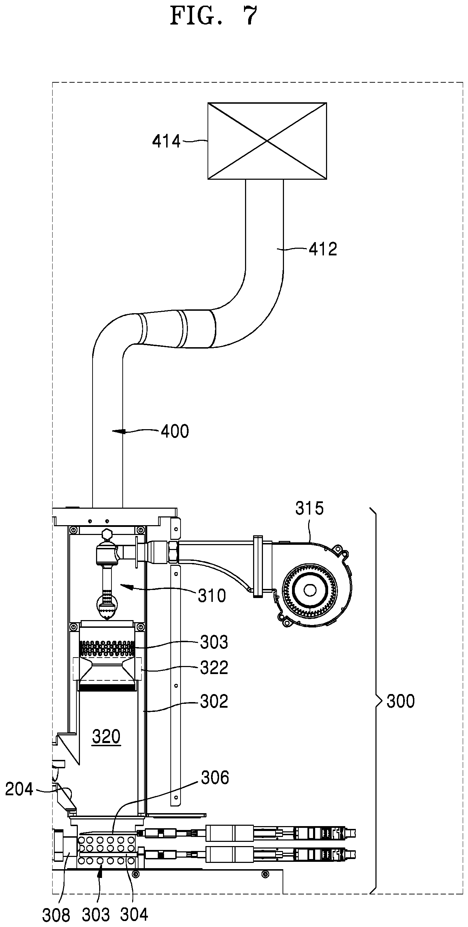

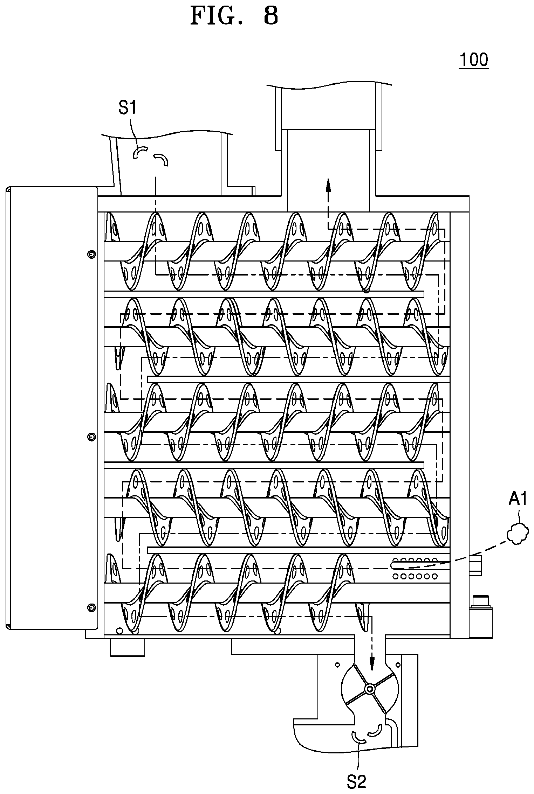

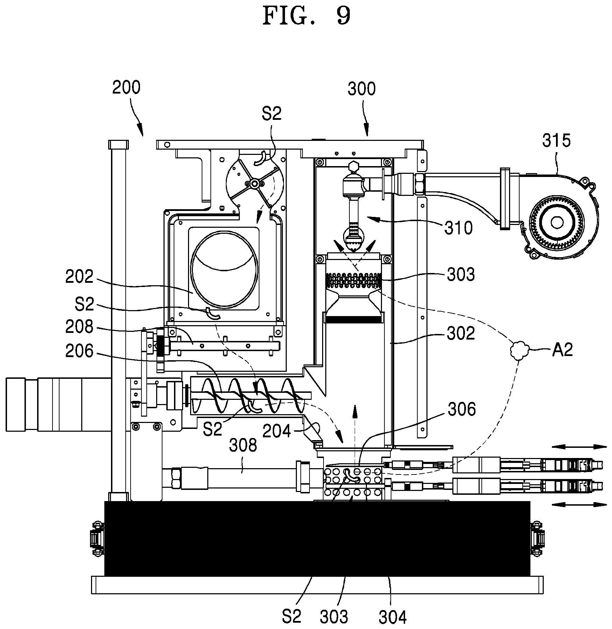

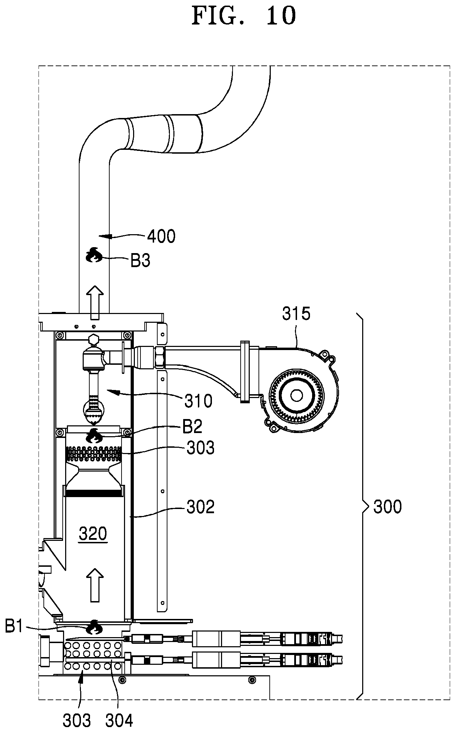

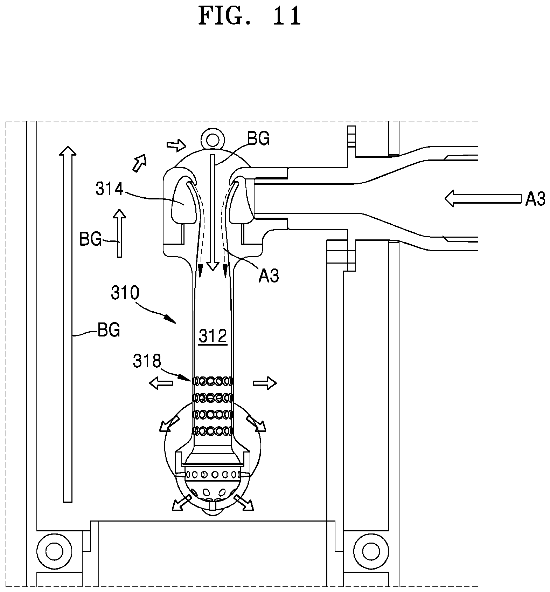

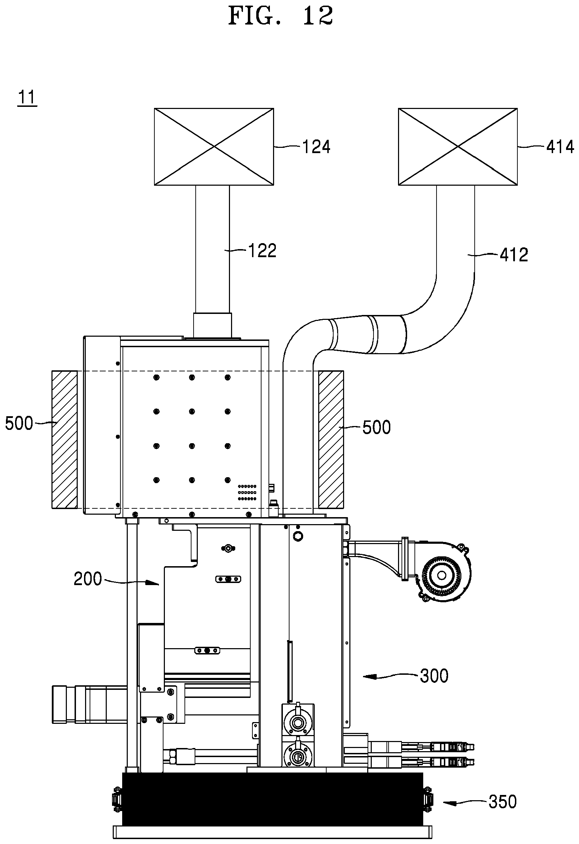

FIG. 1 is a front view of a sludge treatment apparatus according to an example embodiment. FIG. 2 is a rear view of the sludge treatment apparatus of FIG. 1. FIG. 3 is a cross-sectional view illustrating a dryer of the sludge treatment apparatus of FIG. 1. FIG. 4 is a perspective view of a drying screw of the dryer of FIG. 3. FIG. 5 is a cross-sectional view illustrating a feeder and a burner of the sludge treatment apparatus of FIG. 1. FIG. 6 is an enlarged view for describing a Coanda nozzle of FIG. 5. FIG. 7 is a cross-sectional view illustrating a combustor, a serial pipe, a second exhaust pipe, and a second exhaust fan in the sludge treatment apparatus of FIG. 1. FIG. 8 is a diagram corresponding to FIG. 3 and describing the operation of the dryer. FIG. 9 is a diagram corresponding to FIG. 5 and describing a moving path of second sludges. FIG. 10 is a diagram corresponding to FIG. 7 and describing a burning process. FIG. 11 is a diagram corresponding to FIG. 6 and describing return of burning gas by a Coanda nozzle. FIG. 12 is a diagram corresponding to FIG. 1 and illustrating a sludge treatment apparatus including a heat transfer case.

Referring to FIGS. 1 and 2, a sludge treatment apparatus 11 may be provided. The sludge treatment apparatus 11 may include a dryer 100, a first exhaust pipe 122, a first exhaust fan 124, a feeder 200, a burner 300, an ash container 350, a serial pipe 400, a second exhaust pipe 412, and a second exhaust fan 414. Referring to FIGS. 3 and 8, the dryer 100 may include a dryer housing 104 defining a drying chamber 102, drying screws 106 provided in the drying chamber 102, drying air inlets 116 passing through the dryer housing 104, the first exhaust pipe 122 communicating with the drying chamber 102, and a first exhaust fan 124.

The dryer housing 104 may define the drying chamber 102. The dryer housing 104 may include a material with high thermal conductivity. For example, the dryer housing 104 may include a copper alloy or stainless steel (e.g., SUS). The dryer housing 104 may be supplied with heat from the serial pipe 400 of the burner 300 to be described below. First sludges S1 to be described below may be dried by heat supplied from the serial pipe 400. In the present specification, the drying by the heat supplied from the serial pipe 400 may be referred to as indirect drying.

The drying chamber 102 may provide a passage through which the first sludges S1 move. The first sludges S1 may be dried while passing through the drying chamber 102. The drying chamber 102 may extend in a zigzag shape from an inlet 110 through which the first sludges S1 are input to an outlet 112 through which second sludges S2 are discharged to the feeder 200. The second sludges S2 may refer to the first sludges S1 dried by the dryer 100. For example, the first sludges S1 may have water content of 70 % to 85 %, and the second sludges S2 may have moisture content of 8 % to 15 %. Sludges may be burned efficiently when the sludges have water content of 15 % or less. Because the drying chamber 102 extends in a zigzag shape, a sufficient distance for drying the first sludges S1 may be secured even in a small space, such as a home bathroom. Although the drying chamber 102 is illustrated as having five floors, this is only an example. The number of floors of the drying chamber 102 may be determined as necessary. The floor of the drying chamber 102 may refer to an area where the drying screws 106 are disposed.

A pair of drying screws 106 may be disposed in each floor of the drying chamber 102 so as to move the first sludges S1. The first sludges S1 may be provided from the lowermost floor of the drying chamber 102 to a storage area 202 to be described below. In an example, the pair of drying screws 106 in each floor may be disposed such that threads thereof intersect with each other. As illustrated in FIG. 4, the drying screws 106 may include drying screw holes 108 for efficient flow of air A1 in the drying chamber 102. The drying screws 106 may be operated such that the first sludges S1 pass through the drying chamber 102 for about 24 hours. For example, the drying screws 106 may rotate at a speed of 0.2 revolutions per minute (RPM). The drying screws 106 may be operated by a drying screw driving element 114. For example, the drying screw driving element 114 may include a motor. In an example, chains and gears may be provided between the drying screw driving element 114 and the drying screws 106 so as to transfer the power of the drying screw driving element 114 to the drying screws 106.

The drying air inlets 116 may be passages through which the air A1 outside the dryer 100 is introduced into the drying chamber 102. The drying air inlets 116 may be disposed in the lowermost floor of the drying chamber 102 such that the outside air A1 is introduced into the drying chamber 102. However, when necessary, the drying air inlets 116 may be disposed in other floors of the drying chamber 102 such that the outside air A1 is introduced into the drying chamber 102.

The first exhaust pipe 122 connected to the dryer housing 104 may be provided. The first exhaust pipe 122 may communicate with the uppermost floor of the drying chamber 102. The first exhaust fan 124 may be connected to the first exhaust pipe 122. For example, one end of the first exhaust pipe 122 may be connected to the dryer housing 104, and the other end of the first exhaust pipe 122 may be connected to the first exhaust fan 124. The first exhaust fan 124 may be operated such that the air A1 inside the drying chamber 102 communicating with the first exhaust pipe 122 is discharged to the outside through the first exhaust fan 124. The air A1 introduced from the outside of the dryer 100 through the drying air inlets 116 may dry the first sludges S1 while passing through the floors in sequence from the lowest floor to the uppermost floor of the drying chamber 102. In the present specification, the drying of the first sludges S1 passing through the drying chamber 102 by the air A1 may be referred to as natural drying.

Referring to FIGS. 5, 7, 9, and 10, the feeder 200 may include a storage area 202, an inclined input passage 204, a feed screw 206, and an agitator 208. The feed screw 206 may be coupled to the dryer housing 104. The storage area 202 may communicate with the lowermost floor of the drying chamber 102. The storage area 202 may store the second sludges S2 until the second sludges are supplied to the burner 300. For example, the storage area 202 may collect the second sludges S2 until the second sludges S2 are filled up to a height of about 2/3 of the storage area 202. For example, the storage area 202 may collect the second sludges S2 supplied from the dryer 100 for 5 days to 14 days.

The feed screw 206 may be provided below the storage area 202. The feed screw 206 may transfer the second sludges S2 from the storage area 202 to the burner 300. In an example, the feed screw 206 may transfer the second sludges S2 at a constant speed such that the amount of the second sludges S2 input to the burner 300 according to time is constantly maintained. In an example, the feed screw 206 may transfer the second sludges S2 at different speeds according to time such that the amount of the second sludges S2 input to the burner 300 according to time is adjusted. For example, the feed screw 206 may transfer the second sludges S2 at a first speed for a first time after starting the operation, and may transfer the second sludges S2 at a second speed slower than the first speed for a second time after the first time has elapsed. Because the amount of the second sludges S2 input according to time is adjusted, the probability of incomplete burning of the second sludges S2 may be reduced and the generation of noxious gases (e.g., CO and NOₓ) may be reduced. For example, the amount of the second sludges S2 input may be 8.64 g/min for the first time and 7.99 g/min for the second time.

When the second sludges S2 accumulate in the storage area 202, jamming may occur between sidewalls of the storage area 202. That is, the second sludges S2 form an arcuate bridge between the sidewalls of the storage area 202. At this time, when the feed screw 206 is operated, only the second sludges S2 around the feed screw 206 are transferred to the burner 300, and the second sludges S2 above the feed screw 206 may not come down to the feed screw 206. The agitator 208 may be provided above the feed screw 206 so as to prevent occurrence of a situation in which the second sludges S2 are unable to come down to the feed screw. The agitator 208 may mix the second sludges S2 such that the second sludges S2 do not form a bridge. The second sludges S2 in the storage area 202 may smoothly come down to the feed screw 206. Accordingly, the feed screw 206 may supply the second sludges S2 to the burner 300 at a required input amount per hour.

The inclined input passage 204 may be provided between the storage area 202 and the burner 300. The storage area 202 and the burner 300 may communicate with each other through the inclined input passage 204. The inclined input passage 204 may be disposed adjacent to the end of the feed screw 206. The inclined input passage 204 may receive the second sludges S2 from the feed screw 206. The inclined input passage 204 may be inclined such that the second sludges S2 supplied from the feed screw 206 come down to the burner 300 along the inclined input passage 204 by gravity. In other words, the end of the inclined input passage 204 adjacent to the storage area 202 may be disposed at a position higher than a position of the end of the inclined input passage 204 adjacent to the burner 300. The inclined input passage 204 may separate the burner 300 and the storage area 202 far enough apart such that the second sludges S2 in the storage area 202 are not burned. In a case where the storage area 202 is located too close to the burner 300, when the second sludges S2 in the burner 300 are burned, the second sludges S2 in the storage area 202 may also be burned together. When the second sludges S2 in the storage area 202 are burned, noxious gases (e.g., CO and NOₓ) may not be treated and may be discharged to the outside of the sludge treatment apparatus 11. In an example, the treatment of the noxious gases may refer to burning of noxious gases to be described below.

The burner 300 may include a burning drum 302, a first grid plate 304, a second grid plate 306, an igniter 308, and a Coanda nozzle 310. The burning drum 302 may define a burning chamber 320. The burning chamber 320 may provide a space in which the second sludges S2 are burned and a space in which noxious gases (e.g., CO and NOₓ) generated by incomplete burning of the second sludges S2 are burned.

The first grid plate 304 and the second grid plate 306 may be provided below the burning chamber 320. The second grid plate 306 may be provided above the first grid plate 304. The first grid plate 304 and the second grid plate 306 may move into or out of the burning chamber 320. The first grid plate 304 and the second grid plate 306 may be completely inserted into the burning chamber 320, or may be completely discharged out of the burning chamber 320. The first grid plate 304 and the second grid plate 306 may include grid holes. The grid holes may be passages through which air and noxious gases flow. In an example, the first grid plate 304 and the second grid plate 306 may be substantially identical to each other, except for the locations at which the first grid plate 304 and the second grid plate 306 are disposed. While the second sludges S2 are burned, the first grid plate 304 may be completely inserted into the burning chamber 320 and may support the second sludges S2 coming down along the inclined input passage 204. As illustrated in FIG. 10, the second sludges S2 may be burned (B1) while being placed on the first grid plate 304. When ash generated the burning of the second sludges S2 is accumulated on the first grid plate 304, the second grid plate may pulverize the ash. When the ash is not accumulated on the first grid plate 304, the second grid plate 306 may wait while being discharged out of the burning chamber 320. When a significant amount of ash is accumulated on the first grid plate 304, the second grid plate 306 may pulverize the ash by repeating the insertion and discharge operations with respect to the burning chamber 320. Accordingly, a reduction in the burning efficiency of the second sludges S2 due to accumulation of ash may decrease.

The ash container 350 may be provided below the first grid plate 304. After the burning of the second sludges S2 is finished, the first grid plate 304 may be discharged out of the burning chamber 320 and fall into the ash container 350. A detachable drawer (not illustrated) may be provided in the ash container 350. Ash may accumulate in the detachable drawer. A user may empty ash by separating the detachable drawer from the ash container 350.

The burning drum 302 may include burning air inlets 303. Air A2 may be supplied from the outside of the burning drum 302 to the burning chamber 320 through the burning air inlets 303. Some of the burning air inlets 303 may be disposed adjacent to the first grid plate 304. Others of the burning air inlets 303 may be provided in a noxious gas burning area 322 to be described below. The air A2 (specifically, oxygen gas) introduced into the burning chamber 320 may be used for burning the second sludges S2 and the noxious gases.

The igniter 308 may be provided between the first grid plate 304 and the second grid plate 306. The igniter 308 may ignite the second sludges S2 placed on the first grid plate 304. An ignition method of the igniter 308 may be determined as necessary. For example, the igniter 308 may use an electric ignition method or a gas ignition method.

The noxious gas burning area 322 may be a partial area of the burning chamber 320 defined by the inner surface of the burning drum 302 protruding convexly. A width of the noxious gas burning area 322 may be less than widths of other areas of the burning chamber 320 excluding the noxious gas burning area 322. Burning gas BG may be compressed in the noxious gas burning area 322, and accordingly, the temperature of the burning gas BG may rise. For example, the temperature of the burning gas BG in the noxious gas burning area 322 may be higher than 650 °C. More noxious gases may be generated at a temperature lower than a temperature of the noxious gas burning area 322. Because the temperature of the burning gas BG rises to 650 °C or higher, the noxious gas included in the burning gas BG may be burned in the noxious gas burning area 322 (B2). For example, nitrogen oxide (NOx) may be burned in the noxious gas burning area 322 and decomposed into nitrogen (N₂), and carbon monoxide (CO) may be burned in the noxious gas burning area 322 and oxidized to carbon dioxide (CO₂). The air A2 used to burn of noxious gas may be introduced into the noxious gas burning area 322 through other portions of the burning air inlets 303.

Referring to FIGS. 6 and 11, the Coanda nozzle 310 may be provided on the noxious gas burning area 322. The Coanda nozzle 310 may extend in a vertical direction. The Coanda nozzle 310 may include a return passage 312 and a compressed air passage 314. A burning gas inlet 316 through which the burning gas BG is introduced into the return passage 312 may be disposed above the return passage 312, and burning gas outlets 318 through which the burning gas BG is discharged from the return passage 312 to the burning chamber 320 may be disposed below the return passage 312. The return passage 312 may have a streamlined shape that is gradually narrowed and then widened from the burning gas inlet 316 toward the burning gas outlets 318. For example, the width of the return passage 312 may be narrowed from the burning gas inlet 316 to an area adjacent to the lower portion of the compressed air passage 314 and then widened downward.

The compressed air passage 314 may be disposed adjacent to the burning gas inlet 316 and may surround the return passage 312. A narrow gap 313 may be provided between the compressed air passage 314 and the return passage 312, such that the compressed air passage 314 communicates with the return passage 312. The compressed air passage 314 may be connected to a compressed air generator 315. The compressed air generator 315 may supply compressed air A3 to the compressed air passage 314. The compressed air A3 may flow quickly along the compressed air passage 314. Some compressed air A3 may escape through the narrow gap 313 at a high speed. The compressed air A3 escaping through the narrow gap 313 may flow along a wall of the return passage 312 due to a Coanda effect. Due to the rapidly flowing compressed air A3, the pressure inside the return passage 312 may be lower than the pressure outside the burning chamber 320. Accordingly, the burning gas BG around the Coanda nozzle 310 may be introduced into the return passage 312. The burning gas BG introduced into the return passage 312 may be moved to the lower portion of the return passage 312 along the flow of the compressed air A3, and may be discharged to the burning chamber 320 through the burning gas outlets 318.

The return passage 312 having a streamlined shape according to the present disclosure may transfer the burning gas BG more quickly than the return passage having a straight shape. For example, the velocity of the burning gas BG transferred through the return passage 312 having a streamlined shape according to the present disclosure may be about 31 % faster than the velocity of the burning gas BG transferred through the return passage having a straight shape. The return passage 312 having a streamlined shape according to the present disclosure may transfer more burning gas BG than the return passage having a straight shape. For example, the amount of the burning gas BG transferred through the return passage having a streamlined shape according to the present disclosure may be about 2.4 times greater than the amount of the burning gas BG transferred through the return passage having a straight shape.

As the time for which noxious gases are treated (i.e., burned) while remaining in the burning chamber 320 increases, the amount of noxious gases generated by burning the second sludges S2 may decrease. The Coanda nozzle 310 may increase the time for which the noxious gases remain in the burning chamber 320 by returning the burning gas BG. Accordingly, the amount of noxious gases may be reduced, compared to a case where the burning gas BG passes through the burning chamber 320 at once.

The serial pipe 400 may be provided on the burning drum 302. The serial pipe 400 may be disposed adjacent to the dryer housing 104. For example, the serial pipe 400 may be in direct contact with the dryer housing 104. The serial pipe 400 may communicate with the burning chamber 320. High-temperature (about 650 °C or higher) burning gas may be introduced from the burning chamber 320 to the serial pipe 400. The temperature inside the serial pipe 400 may increase due to burning heat generated when the burning gas and the second sludges S2 are burned. For example, when the second sludges S2 are burned, the temperature inside the serial pipe 400 may be 650 °C or higher. In an example, the serial pipe 400 may include a copper alloy or stainless steel (e.g., SUS). In an example, the serial pipe 400 may have a sufficient thickness so that the inside of the serial pipe 400 maintains a temperature of 650 °C or higher for a required time. For example, the serial pipe 400 may have a thickness of 2.8 T or more. As the inside of the serial pipe 400 is maintained at a high temperature (e.g., 650 °C or higher), noxious gases that are not burned in the burning chamber 320 may be burned in the serial pipe 400. That is, the capacity for burning the noxious gases may be increased, compared to a case where the noxious gases are burned only in the burning chamber 320. Accordingly, a small amount of noxious gases may be discharged to the outside of the sludge treatment apparatus 11. Heat of the serial pipe 400 may be transferred to the dryer 100. The first sludges S1 in the dryer 100 may be dried (indirectly dried) by heat transferred from the serial pipe 400. Because the sludge treatment apparatus 11 of the present disclosure dries the first sludges S1 by using natural drying and indirect drying, energy consumption for drying the sludges may be reduced. In an example, as illustrated in FIG. 12, a heat transfer case 500 may be disposed adjacent to the serial pipe 400 so as to efficiently transfer heat from the serial pipe 400 to the dryer 100. For example, the heat transfer case 500 may surround the dryer housing 104 and the serial pipe 400. For example, the heat transfer case 500 may include carbon glass fibers. Although the serial pipe 400 is illustrated as being a straight pipe, the present disclosure is not limited thereto. The shape of the serial pipe 400 may be determined as necessary.

The second exhaust pipe 412 may be provided on the serial pipe 400. The second exhaust pipe 412 may communicate with the serial pipe 400. The second exhaust fan 414 may be connected to the second exhaust pipe 412. For example, one end of the second exhaust pipe 412 may be connected to the serial pipe 400, and the other end of the second exhaust pipe 412 may be connected to the second exhaust fan 414. The second exhaust fan 414 may be operated such that burning gas in the serial pipe 400 communicating with the second exhaust pipe 412 is discharged to the outside through the second exhaust fan 414. Because noxious gases in the burning gas are burned in the burning chamber 320 and the serial pipe 400, noxious gases may be discharged to the outside below a standard value. In other words, the present disclosure may provide the sludge treatment apparatus 11 that discharges a small amount of noxious gases.

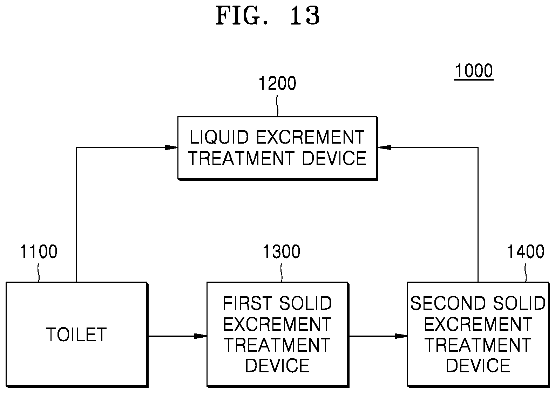

FIG. 13 is a block diagram of an excrement treatment apparatus according to an example embodiment. For brevity of explanation, substantially the same descriptions as provided above with reference to FIGS. 1 to 12 may be omitted.

Referring to FIG. 13, an excrement treatment apparatus 1000 may be provided. The excrement treatment apparatus 1000 may include a toilet 1100, a first solid excrement treatment device 1300, a second solid excrement treatment device 1400, and a liquid excrement treatment device 1200. The toilet 1100 may collect excrement from a user. For example, the toilet 1100 may separate and collect solid excrement and liquid excrement. A method of separating and collecting solid excrement and liquid excrement may be selected as necessary, and the present disclosure is not limited to one specific method. For example, solid excrement may include feces and tissues, and liquid excrement may include urine and washing water.

The toilet 1100 may provide solid excrement to the first solid excrement treatment device 1300. The first solid excrement treatment device 1300 may perform water treatment on solid excrement. For example, solid excrement may undergo a sedimentation process, a bioreaction process, and a disinfection process. Sludges may be generated by the water treatment. The first solid excrement treatment device 1300 may provide sludges to the second solid excrement treatment device 1400. For example, the water content of the sludges may be 97 % or less.

The second solid excrement treatment device 1400 may be substantially the same as the sludge treatment apparatus 11 described with reference to FIG. 1. In an example, the second solid excrement treatment device 1400 may further include a spinning machine. The spinning machine may separate liquid components from the sludges. For example, the water content of the sludges, from which the liquid components are separated, may be 70 % to 85 %. The separated liquid components may be transferred to the liquid excrement treatment device 1200. The sludges, from which the liquid components are separated, may be put into the dryer described with reference to FIGS. 1 to 11. The sludges may be dried and burned by the processes described with reference to FIGS. 1 to 11.

The liquid excrement treatment device 1200 may purify the liquid excrement provided from the toilet 1100 and the liquid components of the sludges supplied from the spinning machine. In an example, the liquid excrement treatment device 1200 may generate washing water by purifying the liquid excrement. The washing water may be stored in a separate water tank and then reused in the toilet.

The present disclosure may provide the excrement treatment apparatus 1000 that consumes less energy for drying sludges and emits less noxious gases.

The description of embodiments of the technical idea of the present disclosure provides an example for the description of the technical idea of the present disclosure. Therefore, the technical idea of the present disclosure is not limited to the above embodiments, and it is apparent to those of ordinary skill in the art that various modifications and changes may be made thereof by combining the embodiments.

## Claims

1. A sludge treatment apparatus comprising:
a dryer configured to dry first sludges and discharge second sludges;
a burner configured to burn the second sludges; and
a serial pipe connected to the burner,
wherein the dryer has air inlets through which air is introduced into the dryer, and
the serial pipe is disposed adjacent to the dryer.

2. The sludge treatment apparatus of claim 1, further comprising a heat transfer case disposed adjacent to the serial pipe,
wherein the heat transfer case is configured to increase efficiency of transferring heat generated in the serial pipe to the dryer.

3. The sludge treatment apparatus of claim 2, wherein the heat transfer case is configured to surround the dryer and the serial pipe.

4. The sludge treatment apparatus of claim 1, wherein the serial pipe has a thickness of 2.8 T or more.

5. The sludge treatment apparatus of claim 1, wherein the serial pipe is disposed adjacent to the dryer.

6. The sludge treatment apparatus of claim 1, wherein the dryer is configured to dry the first sludges such that a water content of the second sludges is 8 % to 15 %.

7. The sludge treatment apparatus of claim 1, further comprising a feeder between the dryer and the burner,
wherein the feeder comprises:
a storage area configured to store the second sludges discharged from the dryer; and
a feed screw configured to transfer the second sludges from the storage area to the burner.

8. The sludge treatment apparatus of claim 7, wherein the feeder further comprises an agitator provided on the feed screw, and
the agitator is configured to mix the second sludges.

9. The sludge treatment apparatus of claim 7, wherein the feeder further comprises an inclined input passage between the storage area and the burner, and
the inclined input passage is inclined such that one end of the inclined input passage adjacent to the storage area is higher than another end of the inclined input passage adjacent to the burner.

10. The sludge treatment apparatus of claim 7, wherein the feed screw is configured to transfer the second sludges at different speeds according to time.

11. The sludge treatment apparatus of claim 1, wherein the burner comprises:
a burning drum defining a burning chamber communicating with the serial pipe; and
a Coanda nozzle disposed in the burning chamber, and
the Coanda nozzle is configured to return burning gas moving toward the serial pipe in the burning chamber.

12. The sludge treatment apparatus of claim 11, wherein the Coanda nozzle comprises:
a return passage; and
a compressed air passage configured to surround the return passage, and
the return passage has a streamlined shape.

13. The sludge treatment apparatus of claim 1, further comprising:
a first exhaust pipe connected to the dryer;
a first exhaust fan connected to the first exhaust pipe;
a second exhaust pipe connected to the serial pipe; and
a second exhaust fan connected to the second exhaust pipe.

14. The sludge treatment apparatus of claim 1, wherein the dryer comprises:
a dryer housing defining a drying chamber;
drying screws provided in the drying chamber; and
drying air inlets passing through the dryer housing.

15. The sludge treatment apparatus of claim 14, wherein the drying air inlets pass through a lower portion of the dryer housing.

16. The sludge treatment apparatus of claim 14, wherein the drying screws comprise flow holes through which air flows in the drying chamber.

17. The sludge treatment apparatus of claim 1, wherein temperatures in the burner and the serial pipe are 650 °C or higher such that noxious gas generated by burning the second sludges is burned in the burner and the serial pipe.

18. An excrement treatment apparatus comprising:
a solid excrement treatment device; and
a liquid excrement treatment device,
wherein the solid excrement treatment device comprises:
a dryer configured to dry first sludges and discharge second sludges;
a burner configured to burn the second sludges; and
a serial pipe connected to the burner,
the dryer has air inlets through which air is introduced into the dryer, and
the serial pipe is disposed adjacent to the dryer.

19. The excrement treatment apparatus of claim 18, wherein temperatures in the burner and the serial pipe are 650 °C or higher such that noxious gas generated by burning the second sludges is burned in the burner and the serial pipe.

20. The excrement treatment apparatus of claim 18, wherein the dryer comprises:
a dryer housing defining a drying chamber;
drying screws provided in the drying chamber; and
drying air inlets passing through the dryer housing.
